# FASCICULE DE BREVET EUROPEEN

(11) **EP 2 417 374 B1**
(45) Date de publication et mention de la délivrance du brevet: **30.08.2017**
(21) Numéro de dépôt: 10715173.0
(22) Date de dépôt: 06.04.2010
(51) Int. Cl.: F16D 43/21, F16F 7/04

(54) **DISPOSITIF MÉCANIQUE DE TRANSMISSION D'EFFORT À SEUIL**
MECHANISCHE VORRICHTUNG ZUR ÜBERTRAGUNG EINER KRAFT MIT EINEM SCHWELLWERT
MECHANICAL DEVICE FOR THE TRANSMISSION OF A FORCE WITH A THRESHOLD

(30) Priorité: 06.04.2009 FR 0901683
(43) Date de publication de la demande: 15.02.2012
(73) Titulaire: Safran Landing Systems, 78140 Vélizy-Villacoublay (FR)
(72) Inventeur: LAFITTE, Arnaud, F-92370 Chaville (FR); VERLYCK, Sabien, F-32550 Auterrive (FR); VALEMBOIS, Guy, F-31400 Toulouse (FR)
(74) Mandataire: Parzy, Benjamin Alain
(86) Numéro de dépôt international: PCT/EP2010/054538
(87) Numéro de publication internationale: WO 2010/115895

(56) Documents cités:
- EP-A1- 0 860 623
- EP-A2- 0 550 261
- WO-A1-85/02661
- DE-A1- 3 013 707
- FR-A1- 2 905 997
- US-A- 1 739 947

## Description

L'invention est relative à un dispositif mécanique de transmission d'effort à seuil.

### ARRIERE-PLAN DE L'INVENTION

Il est connu, notamment du document FR2905997, des dispositifs mécaniques de transmission de couple à seuil comportant un premier élément et un deuxième élément monté à rotation relativement au premier élément, et qui est retenu vis-à-vis du premier élément jusqu'à ce que l'effort imposé par sur le deuxième élément dépasse un seuil donné. Au-delà de ce seuil, le deuxième élément est libéré et peut se déplacer relativement au premier élément.

En particulier, le dispositif illustré aux figures 5 et 6 du document précité comporte un premier élément sous la forme d'une tige comportant des filets gauches et droits, un premier écrou et un deuxième écrou enfilés sur la tige et liés à celle-ci respectivement par une liaison hélicoïdale à gauche et une liaison hélicoïdale à droite. Des disques de friction alternativement liés en rotation à l'un et à l'autre des écrous sont pressés les uns contre les autres par un organe d'appui, ici un organe ressort exerçant un effort sur un manchon qui presse les disques entre eux. Le manchon constitue le deuxième élément du dispositif.

Lors qu'un effort est exercé sur la tige en vue de la déplacer relativement au manchon, la pression exercée sur les disques empêche les écrous de tourner, ce qui a pour effet de retenir la tige, jusqu'à ce que l'effort exercé dépasse un seuil pour lequel les disques se mettent à glisser le uns sur les autres, autorisant la rotation des écrous, et donc l'enfoncement de la tige.

Le dispositif précité est complexe à fabriquer, puisqu'il nécessite la réalisation de filets à droite d'un pas suffisamment grand pour autoriser une liaison hélicoïdale réversible entre la tige et les écrous.

On connaît également du document EP0550261 un dispositif mécanique de transmission d'effort à seuil selon le préambule de la revendication 1. Dans ce dispositif, un élément annulaire (21) est solidaire de la deuxième série de disques, des moyens d'entraînement en rotation en état interposés entre cet élément annulaire et le deuxième élément pour provoquer un déplacement coaxial de l'élément annulaire jusqu'à ce qu'il rattrape le jeu entre lui-même et l'organe d'appui et vienne en butée contre ce dernier pour soulever celui-ci lors d'une relation relative entre l'élément annulaire et le deuxième élément. Il y a ainsi un temps de latence et une course angulaire associée entre le moment où l'élément annulaire commence à tourner relativement au deuxième élément et celui où l'organe d'appui est soulevé.

### OBJET DE L'INVENTION

Un des objets de l'invention est d'adapter le dispositif précité pour lui permettre une réponse plus rapide.

### BREVE DESCRIPTION DE L'INVENTION

L'invention est relative à un dispositif mécanique de transmission d'effort à seuil, comportant un premier élément et un deuxième élément montés tournants relativement l'un à l'autre selon un axe de rotation, et entre lesquels est interposé un organe transmetteur qui solidarise les deux éléments en rotation lorsqu'un couple est imposé à l'un des éléments pour transmettre ce couple de l'un à l'autre des éléments, jusqu'à un couple seuil au-delà duquel les deux éléments deviennent mobiles en rotation à l'encontre d'un couple résistant égal au couple seuil, l'organe transmetteur comportant :
- au moins un premier disque de friction solidaire en rotation du premier élément et un deuxième disque de friction en regard du premier disque;
- un organe d'appui mobile axialement pour, sous l'action d'un organe presseur, presser les disques entre eux et contre un plateau d'appui du premier élément ;
le deuxième disque est directement solidaire en rotation de l'organe d'appui, tandis que des moyens d'entraînement en rotation interposés entre l'organe d'appui et le deuxième élément qui sont agencés pour provoquer un déplacement axial de l'organe d'appui à l'encontre de l'organe presseur lors d'une rotation relative de l'organe d'appui et du deuxième élément ;
l'organe d'appui est fabriqué en une seule pièce. Ainsi, un couple imposé au premier élément est transmis via les disques à l'organe d'appui, qui lui-même transmet le couple au deuxième élément via les moyens d'entraînement en rotation. Cependant, l'organe d'appui tend à se soulever au fur et à mesure de l'augmentation du couple transmis à l'encontre de l'effort de l'organe presseur, et lorsque le couple atteint le seuil, le soulèvement de l'organe d'appui est tel que les disques glissent les uns sur les autres, libérant ainsi en rotation les deux éléments à l'encontre d'un couple frictionnel résistant.

L'organe d'appui est ainsi directement soulevé dès la rotation relative de ce dernier par rapport au deuxième élément, sans attendre qu'un jeu soit rattrapé.

### BREVE DESCRIPTION DES DESSINS

L'invention sera mieux comprise à la lumière de la description qui suit de modes particuliers de réalisation de l'invention, en référence aux figures des dessins annexés parmi lesquelles :
- la figure 1 est une vue en coupe d'un dispositif de transmission d'effort à seuil, selon un premier mode particulier de réalisation de l'invention ;
- la figure 2 est une vue partielle suivant la flèche II de la figure 1 au niveau de l'organe d'entraînement en rotation entre l'organe d'appui et le deuxième élément, le capot visible à la figure 1 ayant été enlevé ;
- la figure 3 est une vue de dessous de l'organe d'appui du dispositif des figures 1 et 2 ;
- la figure 4 est une vue en coupe d'un dispositif de transmission d'effort à seuil, selon un deuxième mode particulier de réalisation de l'invention.

### DESCRIPTION DETAILLEE DES FIGURES

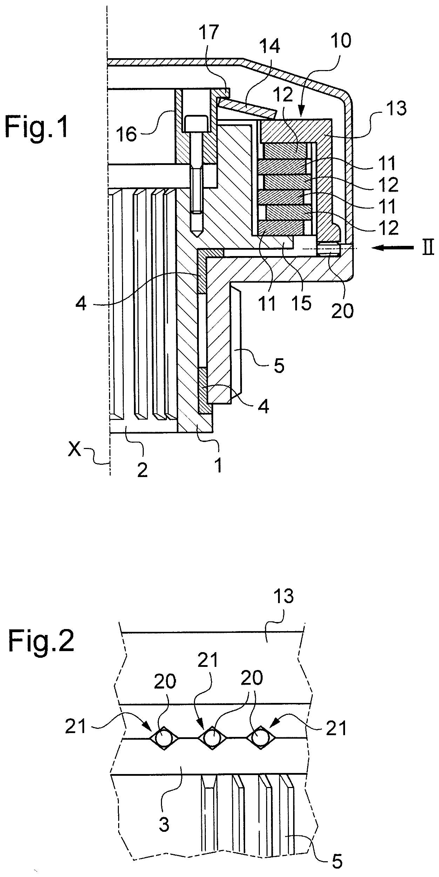

En référence aux figures 1 et 2, et conformément à un premier mode de réalisation de l'invention, le dispositif illustré ici permet une transmission d'un mouvement de rotation et comprend tout d'abord un premier élément sous la forme d'un premier manchon 1 généralement de révolution autour d'un axe X. Le premier manchon 1 est creux et comporte des cannelures internes 2 pour son association en rotation à un élément menant, par exemple l'extrémité d'un manchon de moteur (non représenté). Le dispositif comporte un deuxième élément sous la forme d'un deuxième manchon 3 qui est monté tournant sur le premier manchon 1 autour de l'axe X au moyen de paliers 4. Le deuxième manchon 3 est pourvu extérieurement de dentures 5 pouvant coopérer avec une roue dentée (non représentée).

Les manchons 1, 3 sont liés en rotation par un organe transmetteur 10 comportant :
- une première série de disques de friction 11 qui sont solidaires en rotation du premier manchon 1 ;
- une deuxième série de disques de friction 12, alternés avec ceux de la première série, qui sont solidaires en rotation avec la jupe cylindrique d'un organe d'appui 13, ici en forme générale de cloche qui recouvre la pile de disques, tout en étant en appui sur le disque supérieur de la pile. L'organe d'appui 13 est ici libre axialement ;

- un organe presseur, ici en l'occurrence une rondelle ressort 14 qui exerce sur l'organe d'appui 13 un effort de pressage pour presser les disques les uns contre les autres, la pile de disques étant appuyée contre un plateau 15 du premier manchon 1 ;
- une douille de réglage 16 vissée sur le premier manchon 1, et présentant un redan 17 contre lequel la rondelle ressort 14 est en appui. la douille de réglage 16 est déplaçable axialement par vissage ou dévissage des vis de maintien pour régler l'effort de pressage exercé par la rondelle ressort 14 sur l'organe d'appui 13.

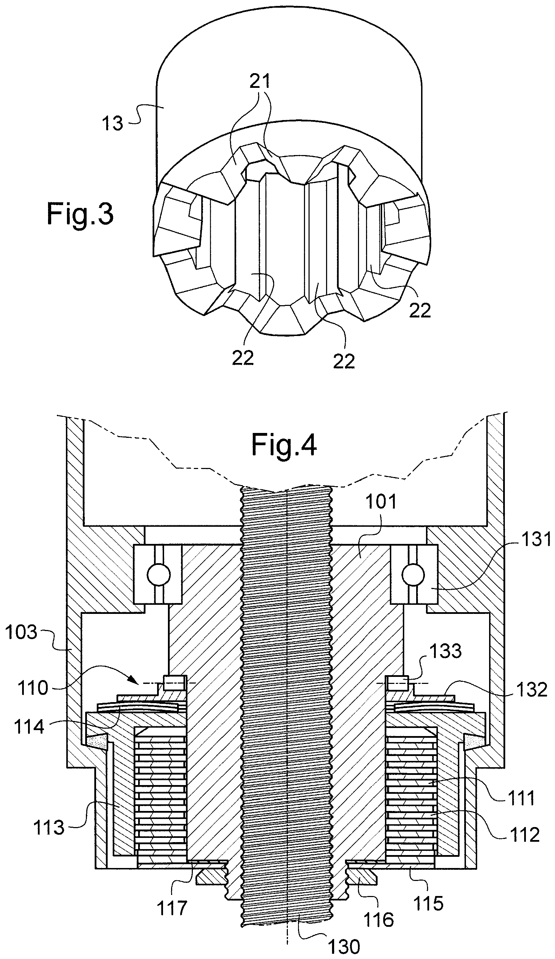

Enfin, l'organe d'appui 13 est lié en rotation au deuxième manchon 3 par des moyens d'entraînement en rotation plus particulièrement visibles à la figure 2, comprenant une série de rouleaux 20 dont l'axe de rotation s'étend radialement relativement à l'axe X, et qui sont disposés dans des cavités à facettes 21 définies des demi-cavités à deux pentes formées dans chacune des pièces en regard. A la figure 3 est illustré l'organe d'appui 13. On aperçoit les cannelures internes 22 qui coopèrent avec des encoches périphériques des disques 12 de la deuxième série pour organiser la liaison en rotation entre lesdits disques et l'organe d'appui 13. On aperçoit également les pentes 21 (seules deux pentes sont référencées) définissant les demi-cavités recevant les rouleaux 20.

Le fonctionnement du dispositif est le suivant. Lorsqu'un couple est imposé au premier manchon 1, celui-ci transmet ce couple aux disques 11 de la première série qui, du fait de l'effort de pressage imposé par la rondelle ressort 14 et transmis par l'organe d'appui 13, entraîne en rotation les disques 12 de la deuxième série. Ceux-ci transmettent le couple à l'organe d'appui 13 qui, par l'intermédiaire des rouleaux 20, transmet le couple au deuxième manchon 3. Cependant, plus le couple transmis augmente et plus l'organe d'appui 13 va avoir tendance à tourner vis-à-vis du deuxième manchon 3, ce qui provoque un roulement sur les rouleaux 20 qui provoque un soulèvement l'organe d'appui 13 à l'encontre de l'effort de pressage exercé par la rondelle ressort 14. Quand le couple atteint un certain couple seuil, déterminé par l'effort exercé par la rondelle ressort 14, la levée de l'organe d'appui 13 est suffisamment importante pour provoquer un glissement des disques entre eux, de sorte qu'ils ne sont plus en mesure de transmettre un couple supérieur au couple seuil. Le premier manchon 1 est alors libéré en rotation vis-à-vis du deuxième manchon 3 et peut tourner vis-à-vis de celui-ci, sous un couple frictionnel résistant égal au couple seuil.

Le dispositif de l'invention est bien sûr réversible, et on peut transmettre un couple du deuxième manchon 2 vers le premier manchon 1, avec le même effet de limitation de couple, dans un sens ou dans l'autre. On peut bien sûr rendre le dispositif asymétrique, en jouant sur l'angle des facettes délimitant les cavités 21.

A la figure 4 est représenté un dispositif de transmission d'effort selon un deuxième mode particulier de réalisation de l'invention. Les références des éléments communs au mode de réalisation précédent ont été augmentées d'une centaine. On reconnaît ainsi le premier manchon 101, et le deuxième manchon 103, l'organe transmetteur avec les disques 111, 112 (seuls deux disques sont référencés), l'organe d'appui 113 et l'organe presseur 114 (ici deux rondelles ressorts) disposé entre l'organe d'appui 113 et le premier manchon 101. Comme auparavant, les disques 111 de la première série sont solidaires en rotation du premier manchon 101, tandis que les disques 112 de la deuxième série sont solidaires en rotation de l'organe d'appui 113.

De même on reconnaît les rouleaux 120 interposés entre l'organe d'appui 113 et le deuxième manchon 103. Comme auparavant, les rouleaux 120 sont reçus dans des cavités formées par deux demi-cavités à pentes creusées respectivement dans l'organe d'appui 113 et le deuxième manchon 103.

Le dispositif est ici utilisé pour former un amortisseur télescopique à friction à seuil. A cet effet le premier manchon 101 comporte un taraudage interne pour sa coopération avec une tige 130 à filetage homologue selon une liaison hélicoïdale réversible, de sorte qu'une translation de la tige 130 provoque une rotation du premier manchon 101. La tige forme ainsi le premier élément du dispositif. Quant au deuxième manchon 103, il forme le palier inférieur d'un cylindre 133 de l'amortisseur, et porte un roulement 131 de guidage en rotation du premier manchon 101, qui lui-même forme un palier de guidage de la tige 130 lors de ses enfoncements dans le cylindre 133.Le cylindre forme le deuxième élément du dispositif. Les deux éléments sont mobiles relativement l'un à l'autre selon une direction de coulissement, coïncidant avec l'axe X.

Le fonctionnement de l'amortisseur est le suivant. Lorsqu'un effort est appliqué à la tige tendant à faire pénétrer celle-ci dans le cylindre de l'amortisseur, cet effort tend à faire tourner le premier manchon Cependant, celui-ci est empêché de tourner par l'effet de la friction des disques 111,112 entre eux, de sorte que la tige 120 ne s'enfonce pas. Cependant, si l'effort approche un certain seuil, la rotation du premier manchon entraîne une rotation de l'organe d'appui 113 qui tend à se soulever sur les rouleaux 120 à l'encontre de l'organe presseur 114. Pour un certain seuil d'effort, le soulèvement de l'organe d'appui 113 est tel que l'effort de pressage sur les disques ne peut plus empêcher un glissement des disques 111,112 entre eux. Le premier manchon 101 se met alors à tourner sous un couple constant, correspondant au seuil d'effort d'enfoncement. La tige 130 est alors libre de s'enfoncer à l'encontre d'un effort sensiblement constant égal à l'effort de seuil ainsi déterminé.

L'effort de seuil d'enfoncement peut être facilement réglé en interposant entre le premier manchon 101 et le plateau d'appui 115 des disques 111,112, qui est maintenu sur le premier manchon grâce à écrou 116, une cale d'épaisseur 117 dont l'épaisseur détermine la valeur de l'effort de pressage exercé par l'organe presseur 114, et, partant, la valeur de l'effort de seuil d'enfoncement.

Pour faciliter la rotation du premier manchon 101 lors de l'enfoncement de la tige 130, une butée axiale 132 à rouleaux 133 a été installée sur le premier manchon 101 pour former un appui de l'organe presseur 114 qui ne tourne pas lorsque le premier manchon 101 tourner sous l'effet de l'enfoncement de la tige 130.

L'invention n'est pas limitée à ce qui vient d'être décrit, mais englobe au contraire toute variante entrant dans le cadre défini par les revendications. En particulier, bien que le profil des cavités recevant les rouleaux formant les moyens d'entraînement en rotation disposés entre l'organe d'appui et le deuxième manchon aient ici un profil à pentes, on pourra bien sûr donner à au moins l'une des demi-cavités tout profil provoquant un soulèvement de l'organe d'appui à l'encontre de l'organe presseur lors d'une rotation relative de l'organe d'appui vis-à-vis du deuxième manchon. Plus généralement, on pourra faire appel à tout moyen d'entraînement en rotation susceptible d'écarter l'organe d'appui du deuxième manchon à l'encontre de l'organe presseur, par exemple des cames en regard.

En outre, bien que dans les exemples illustrés, l'organe d'appui se présente d'un bloc, il peut être physiquement divisé en une plaque d'appui sur les disques, un tube de reprise de couple formant jupe qui reprend le couple transmis par les disques de la deuxième série, solidaire d'une couronne d'entraînement en rotation coopérant avec le deuxième manchon via les moyens d'entraînement.

On aura bien sûr intérêt à multiplier les disques pour augmenter la surface de friction mise en oeuvre. Cependant, on peut se contenter d'un disque solidaire en rotation du premier manchon, celui-ci étant pressé directement entre le premier manchon et l'organe d'appui, qui fait alors office de deuxième disque.

## Revendications

1. Dispositif mécanique de transmission d'effort à seuil, comportant un premier élément (1 ; 101) et un deuxième élément (2 ; 102) montés tournants relativement l'un à l'autre selon un axe de rotation (X), et entre lesquels est interposé un organe transmetteur (10 ; 110) qui solidarise les deux éléments en rotation lorsqu'un couple est imposé à l'un des éléments pour transmettre ce couple de l'un à l'autre des éléments, jusqu'à un couple seuil au-delà duquel les deux éléments deviennent mobiles en rotation à l'encontre d'un couple résistant égal au couple seuil, l'organe transmetteur comportant :
- au moins un premier disque de friction (11 ; 111) solidaire en rotation du premier élément et un deuxième disque de friction (12 ; 112) en regard du premier disque;
- un organe d'appui (13 ; 113) mobile axialement pour, sous l'action d'un organe presseur (14 ; 114), presser les disques entre eux et contre un plateau d'appui (15 ; 115) du premier élément ;
le deuxième disque étant directement solidaire en rotation de l'organe d'appui, tandis que des moyens d'entraînement en rotation (20, 21 ; 120, 121) sont interposés entre l'organe d'appui et le deuxième élément et sont agencés pour provoquer un déplacement axial de l'organe d'appui à l'encontre de l'organe presseur lors d'une rotation relative de l'organe d'appui et du deuxième élément,
**caractérisé en ce que**
l'organe d'appui (13 ; 113) est fabriqué en une pièce.

2. Dispositif de transmission selon la revendication 1, dans lequel les moyens d'entraînement en rotation comportent des rouleaux (20 ; 120) disposés dans des cavités (21 ; 121) définies par des demi-cavités creusées en regard l'une de l'autre dans l'organe d'appui et le deuxième élément, au moins l'une des demi-cavités en regard ayant un profil propre à provoquer un écartement de l'organe d'appui et du deuxième élément lors d'une rotation relative de l'organe d'appui vis-à-vis du deuxième manchon.

3. Dispositif de transmission selon la revendication 1, dans lequel le premier élément est pourvu de moyens de réglage (16 ; 116) de l'effort de pressage.

4. Amortisseur à friction comportant un dispositif à transmission d'effort selon l'une des revendications précédentes, l'amortisseur comportant une tige (130) coopérant avec le premier élément (101) selon une liaison hélicoïdale réversible, et un cylindre (133) solidaire du deuxième élément (103) dans lequel la tige pénètre lors de son enfoncement.

## Patentansprüche

1. Mechanische Übertragungsvorrichtung zur Übertragung einer Kraft mit einem Schwellwert, umfassend ein erstes Element (1; 101) und ein zweites Element (2; 102), die relativ zueinander drehbar um eine Drehachse (X) gelagert sind und zwischen denen ein Übertragungsorgan (10; 110) angeordnet ist, das die beiden Elemente drehfest miteinander verbindet, wenn ein Drehmoment auf eines der Elemente aufgebracht wird, um dieses Drehmoment von dem einen auf das andere der Elemente zu übertragen, bis zu einem Schwellwertdrehmoment, jenseits desselben die beiden Elemente entgegen einem Widerstandsdrehmoment, das gleich dem Schwellwertdrehmoment ist, in Drehung beweglich werden, wobei das Übertragungsorgan umfasst:
- mindestens eine erste Reibscheibe (11; 111), die drehfest mit dem ersten Element verbunden ist, und eine zweite Reibscheibe (12; 112) gegenüber der ersten Scheibe;
- ein Anlageorgan (13; 113), das axial beweglich ist, um unter der Wirkung eines Andruckorgans (14; 114) die Scheiben aneinander und gegen eine Anlageplatte (15; 115) des ersten Elements zu drücken;
wobei die zweite Scheibe direkt drehfest mit dem Anlageorgan verbunden ist, während Drehantriebsmittel (20, 21; 120, 121) zwischen dem Anlageorgan und dem zweiten Element angeordnet und so ausgebildet sind, dass sie eine axiale Verschiebung des Anlageorgans entgegen dem Andruckorgan während einer relativen Drehung des Anlageorgans und des zweiten Elements verursachen,
dadurch gekenntzeichnet, dass das Anlageorgan (13; 113) in einem Stück gefertigt ist.

2. Übertragungsvorrichtung nach Anspruch 1, bei der die Drehantriebsmittel Rollen (20; 120) umfassend, die in Hohlräumen (21; 121) angeordnet sind, die von Halbhohlräumen definiert sind, die einander gegenüberliegend in dem Anlageorgan und dem zweiten Element ausgehöhlt sind, wobei mindestens einer der gegenüberliegenden Halbhflhlräume ein Profil hat, das geeignet ist, bei einer relativen Drehung des Anlageorgans gegenüber der zweiten Hülse ein Entfernen des Anlageorgans von dem zweiten Element zu verursachen.

3. Übertragungsvorrichtung nach Anspruch 1, bei der das erste Element mit Regelungsmitteln (16; 116) zum Regeln der Anpresslcraft versehen ist.

4. Reibstoßdämpfer, umfassend eine Kraftübertragungsvorrichtung nach einem der vorhergehenden Ansprüche, wobei der Stoßdämpfer eine Stange (130) umfasst, die mit dem ersten Element (101) gemäß einer reversiblen Schraubverbindung zusammenwirkt, sowie einen fest mit dem zweiten Element (103) verbundenen Zylinder (133), in den die Stange während ihres Eindrücken eindringt.

## Claims

1. A mechanical transmission device for transmitting a force with a threshold, the device comprising a first element (1; 101) and a second element (2; 102) rotatably mounted relative to each other about an axis of rotation (X), and having a transmitter member (10; 110) interposed between them to constrain the two elements to rotate together when a torque is imparted to one of the elements for transmitting the torque to the other one of the elements, up to a threshold torque beyond which the two elements become movable in rotation against an opposing torque equal to the threshold torque, the transmitter member comprising:
• at least a first friction disk (11; 111) constrained to rotate with the first element, and a second friction disk (12; 112) facing the first disk;
• a bearing member (13; 113) that is axially movable to press the disks together and against a bearing turntable (15; 115) of the first element under drive from a presser member (14; 114);
the second disk being directly constrained to rotate with the bearing member, while the rotary drive means (20, 21; 120, 121) are interposed between the bearing member and the second element and are arranged to cause the bearing member to move axially against the presser member during relative rotation of the bearing member and the second element,
**characterized in that** the bearing member (13; 113) is fabricated as a single part.

2. A transmission device according to claim 1, wherein the rotary drive means comprise rollers (20; 120) arranged in cavities (21; 121) defined by facing half-cavities indented in the bearing member and the second element, at least one of the facing half-cavities having a profile suitable for causing the bearing member and the second element to move apart during relative rotation of the bearing member and the second sleeve.

3. A transmission device according to claim 1, wherein the first element is provided with adjustment means (16; 116) for adjusting the pressing force.

4. A friction damper including a force transmission device according to any preceding claim, the damper comprising a rod (130) co-operating with the first element (101) via a reversible helical connection, and a cylinder (133) secured to the second element (103) and into which the rod penetrates when the damper contracts.
